# EUROPÄISCHE PATENTSCHRIFT

(11) **EP 4 308 889 B1**
(45) Veröffentlichungstag und Bekanntmachung des Hinweises auf die Patenterteilung: **30.07.2025**
(21) Anmeldenummer: 22728349.6
(22) Anmeldetag: 04.05.2022
(51) Int. Cl.: G01F 23/02

(54) **VORRICHTUNG ZUM ANZEIGEN EINES FLUIDNIVEAUS**
DEVICE FOR INDICATING A FLUID LEVEL
DISPOSITIF D'INDICATION D'UN NIVEAU DE FLUIDE

(30) Priorität: 10.06.2021 DE 102021002969
(43) Veröffentlichungstag der Anmeldung: 24.01.2024
(73) Patentinhaber: HYDAC Accessories GmbH, 66280 Sulzbach/Saar (DE)
(72) Erfinder: SCHMITT, Martin, 66917 Knopp-Labach (DE)
(74) Vertreter: Bartels und Partner, Patentanwälte
(86) Internationale Anmeldenummer: PCT/EP2022/061955
(87) Internationale Veröffentlichungsnummer: WO 2022/258264

(56) Entgegenhaltungen:
- WO-A1-2019/214900
- DE-C- 856 700
- JP-U- 3 134 300
- US-A- 4 693 117

## Beschreibung

Die Erfindung betrifft eine Vorrichtung zum Anzeigen eines Fluidniveaus in einem Vorratstank, die mittels zweier, vertikal voneinander beabstandeter Fluidverbindungen an den Vorratstank anschließbar ist.

Solche Vorrichtungen werden fachsprachlich auch als Flüssigkeitsstandsanzeigen bezeichnet. Durch DE 10 2018 003 727 A1 bzw. WO 2019/214900 A1 ist eine solche Flüssigkeitsstandsanzeige zum Anzeigen und Kontrollieren von Fluiden bekannt, mit zwei vertikal voneinander beabstandeten Fluidanschlüssen, die als Fluidverbindung jeweils in ein Steigrohr einmünden, das von einem Rahmen umgeben ist, in dessen Frontwand sich eine Aussparung befindet, die einen Sichtbereich für die Beobachtung des Fluidniveaus im Steigrohr freigibt. Bei der bekannten Lösung ist eine zusätzliche Abdeckung vorgesehen, die an der Aussparung abnehmbar anbringbar ist und ein das Steigrohr im Sichtbereich vor mechanischen Einwirkungen von außen schützendes Schutzfenster bildet. Das regelmäßig als Glasrohr ausgebildete Steigrohr ist durch das Schutzfenster vor direkter mechanischer Einwirkung von außen her geschützt, so dass es weder splittern noch verkratzen kann. Das Schutzfenster ist bevorzugt aus einem durchsichtigen, UVbeständigen Kunststoffwerkstoff einteilig ausgebildet und weist zur Bildung einer Schnappverbindung mit dem Rand der Aussparung des Rahmens nachgiebige Hakenteile auf, so dass das Schutzfenster durch Verclippen auf einfache Weise am Rahmen anbringbar ist und dergestalt bei einer etwaigen Beschädigung ohne wesentlichen Aufwand gegen ein neues Schutzfenster ausgetauscht werden kann.

Weitere Vorrichtungen zum Anzeigen eines Fluidniveaus gehen aus der JP 3 134 300 U, der US 4 693 117 A und der DE 856 700 C hervor.

Ausgehend von diesem Stand der Technik liegt der Erfindung die Aufgabe zugrunde, die bekannte Lösung unter Beibehalten ihres Vorteils, eine verbesserte Inaugenscheinnahme auf das Fluidniveau in einem Vorratstank zu gewährleisten dahingehend weiter zu verbessern, dass auf besonders kostengünstige Weise eine Flüssigkeitsstandsanzeige erhalten ist. Eine dahingehende Aufgabe löst eine Vorrichtung mit den Merkmalen des Patentanspruches 1 in seiner Gesamtheit.

Für den Erhalt der erfindungsgemäßen Vorrichtung ist dabei von besonderer Bedeutung, dass diese im Wesentlichen aus drei miteinander verclipbaren Komponenten besteht in Form
- eines Basisteils zum Festlegen an den Vorratstank,
- eines in der Art eines Steigrohrs ausgebildeten Gehäuseteils zum Anzeigen eines dem Inhalt des Vorratstanks entsprechenden Fluidniveaus, und
- eines Verschlussteils zum Abdichten des Innern des Gehäuseteils gegenüber der Umgebung,
wobei die jeweilige Clipverbindung aus einem Rasthaken als dem Rastmittel der einen Komponente gebildet ist, die in eine zugehörige Rastausnehmung als dem Rastmittel der anderen zu verclippenden Komponente, vorzugsweise in wieder lösbarer Weise, eingreift.

Die dahingehenden Clipverbindungen über Rasthaken und dazugehörigen, korrespondierenden Rastausnehmungen lassen sich in einfacher Weise, beispielsweise im Rahmen der Kunststoff-Spritzgießherstellung erhalten, wobei die Verrastung funktionssicher in der Anwendung ist und im Bedarfsfall sich dennoch wieder leicht lösen lässt.

Durch die einzelnen, miteinander verclipbaren Komponenten ist eine Art Baukastensystem mit Einzelmodulen realisiert, die auf Vorrat angefertigt in rascher Herstellabfolge durch Verclippen miteinander sinnfällig verbunden eine Flüssigkeitsstandsanzeige ergeben. Die einzelnen miteinander verclipbaren Komponenten lassen sich vorzugsweise im Rahmen von Kunststoff-Spritzgießverfahren erhalten, was zu günstigen Herstellkosten führt, und bei gleichem funktionellem Aufbau lassen sich unterschiedlichste Arten von Flüssigkeitsstandsanzeigen erhalten, insbesondere was deren jeweilige Baugröße anbelangt.

Bei einer bevorzugten Ausführungsform der erfindungsgemäßen Vorrichtung ist vorgesehen, dass das Basisteil rückwärtig eine eben verlaufende Rückwand aufweist, die im montierten Zustand einen Abstand zu einer zuordenbaren Tankwand des Vorratstanks aufweist und die in Richtung des Gehäuseteils vorspringend einen Festlegerand aufweist mit Rastmitteln zum Verclippen mit weiteren Rastmitteln des Gehäuseteils. Dergestalt kann im Bedarfsfall das zumindest teilweise durchsichtige Kunststoff-Gehäuseteil bei mechanischer Beschädigung, wie Verkratzen oder dergleichen, gegen ein neues entsprechendes Gehäuseteil getauscht werden. Ferner wird durch den Abstand zwischen Vorrichtung und Tank einer möglichen Schwitzwasserbildung entgegengewirkt.

Bei einer weiteren besonders bevorzugten Ausführungsform der erfindungsgemäßen Vorrichtung ist vorgesehen, dass das Gehäuseteil für die optische Beobachtung des Fluidniveaus vollständig transparent ausgebildet ist und einen Hohlraum für die Aufnahme eines das Fluidniveau bestimmenden Fluids aufweist. Dergestalt ist das gesamte Gehäuseteil für einen Beobachter durchsichtig, so dass sich eine Einsehbarkeit betreffend das im Gehäuseteil aufgenommene Fluidniveau von 180° ergibt.

Bei einer weiteren bevorzugten Ausführungsform der erfindungsgemäßen Vorrichtung ist vorgesehen, dass das Verschlussteil aus einem Stopfen gebildet ist, der das Gehäuseteil nach einer Seite hin, insbesondere kopfseitig, abschließt, wohingegen das Gehäuseteil auf seiner hierzu gegenüberliegenden Seite, insbesondere fußseitig, von Wandteilen des Gehäuseteils verschlossen ist. Während bekannte Lösungen (DE 10 2018 003 727 A1) regelmäßig auf gegenüberliegenden Seiten des rohrförmigen Gehäuseteils als der eigentlichen Anzeigeeinrichtung zwei stopfenförmige Verschlussteile aufweisen, was herstelltechnisch entsprechend aufwendig ist, kommt die erfindungsgemäße Lösung mit nur einem dahingehenden Verschluss- oder Abschlussteil aus, was den Zusammenbau erleichtern hilft. Im Übrigen lassen sich hierdurch die Herstellkosten senken, da eben nur noch ein Verschlussteil benötigt wird gegenüber den sonst üblichen zwei Verschlussteilen.

Bei einer weiteren bevorzugten Ausführungsform der erfindungsgemäßen Vorrichtung ist vorgesehen, dass die jeweilige Fluidverbindung aus einer Hohlschraube gebildet ist, die sowohl das Gehäuseteil als auch das Basisteil und die Tankwand des Vorratstanks fluidführend durchgreift und mittels Ringdichtungen zumindest gegenüber der Tankwand und dem Gehäuseteil abgedichtet ist. Vorzugsweise ist dabei vorgesehen, dass der Verschlussstopfen eine Ringausnehmung aufweist, die von derjenigen Hohlschraube durchgriffen ist, die oberhalb des Fluidniveaus im Vorratstank in diesen eingreift. Von Vorteil ist dabei weiter, dass die Rückwand des Basisteils von Ausnehmungen für die jeweilige Hohlschraube durchgriffen ist, die als ringförmige Aufnahmen in Richtung des Gehäuseteils vorstehen.

Dergestalt ist mit üblichen elastomeren Ringdichtungen sowohl eine Abdichtung der Flüssigkeitsstandsanzeige gegenüber der Tankwand realisiert als auch gegenüber den Hohlschrauben, die die jeweilige Fluidverbindung zwischen dem Tankinneren und dem Inneren des Gehäuseteils als der eigentlichen Anzeigeeinrichtung herstellen. Die dahingehenden Ringdichtungen sind ebenso wie die Hohlschrauben standardisierbare Bauteile, die sich in großer Stückzahl kostengünstig herstellen lassen.

Bei einer weiteren bevorzugten Ausführungsform der erfindungsgemäßen Vorrichtung ist vorgesehen, dass das Gehäuseteil an seiner freien, der Rückwand des Basisteils gegenüberliegenden Stirnseite eine Vertiefung aufweist, an der sich die Hohlschraube mit ihrem Kopfteil über eine Ringdichtung abstützt, und dass die jeweilige Hohlschraube im Bereich der Vertiefung eine weitere Ausnehmung durchgreift, die mit der zuordenbaren Ausnehmung im Basisteil fluchtet. Durch die fluchtenden Ausnehmungen im Bereich des Gehäuseteils sowie des Basisteils sind diese derart zueinander justiert, dass die jeweilige Hohlschraube hemmnisfrei die dahingehenden Ausnehmungen durchgreifen kann, zwecks Festlegen der Gesamtvorrichtung an der Tankwand des Vorratstanks. Ferner sind über die Vertiefung die darin angeordneten Ringdichtungen geschützt.

Bei einer weiteren bevorzugten Ausführungsform der erfindungsgemäßen Vorrichtung ist vorgesehen, dass eine der weiteren Ausnehmungen im Gehäuseteil in der Art eines Langloches ausgebildet ist. Aufgrund der Langlochausgestaltung lässt sich ein Toleranzausgleich zur Schnittstelle Vorratstank herstellen, mit der Möglichkeit, einen Bohrungsabstand auszugleichen zwischen ± 1,5 mm bei einem Winkelausgleich von ± 3° zur Bohrungsachse. In dem derart vorgegebenen Toleranzrahmen ist es dann möglich, Fertigungstoleranzen sowohl betreffend den Vorratstank als auch die Flüssigkeitsstandsanzeige ohne Weiteres auszugleichen, so dass man insgesamt mit geringeren Herstellgenauigkeiten auskommt als bei massiven Befestigungslösungen, wie sie beispielsweise im Rahmen der DE 10 2015 202 953 A1 für eine vergleichbare Niveauanzeige-Vorrichtung aufgezeigt sind.

Im Folgenden wird die erfindungsgemäße Lösung anhand eines Ausführungsbeispiels nach der Zeichnung näher erläutert. Dabei zeigen in prinzipieller und nicht maßstäblicher Darstellung die
- Fig. 1: in der Art einer Explosionszeichnung die wesentlichen Komponenten der Vorrichtung,
- Fig. 2: eine Unteransicht auf das Gehäuseteil als der eigentlichen Niveauanzeige-Einrichtung,
- Fig. 3: eine perspektivische Unteransicht auf das stopfenartige Verschlussteil, und
- Fig. 4: einen Querschnitt durch die Vorrichtung wie sie an einem Vorratstank, der nur mit seiner Tankwand ausschnittsweise dargestellt ist, angebracht ist.

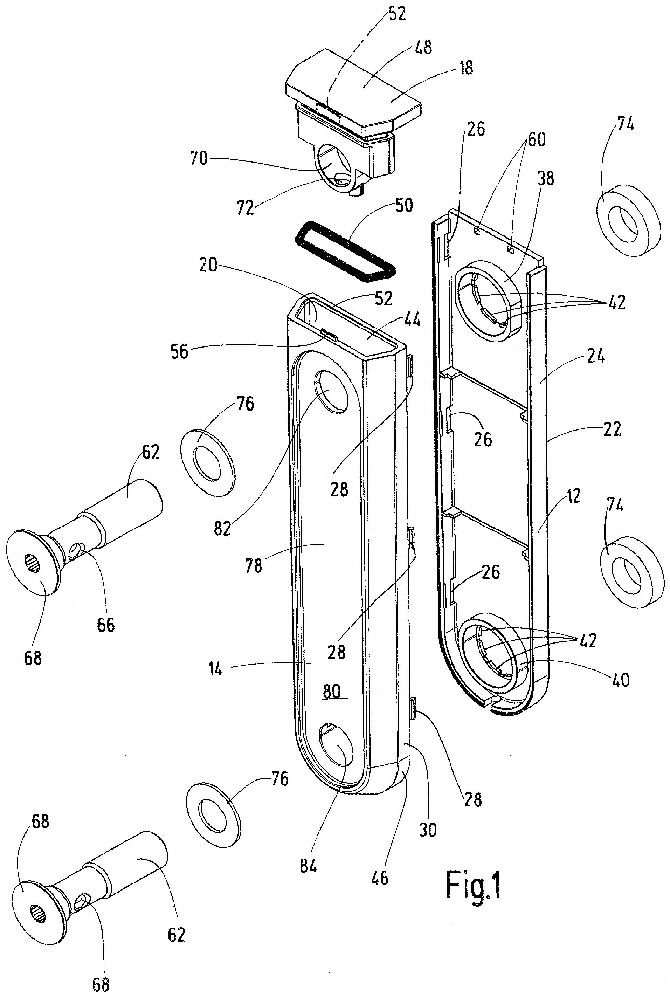

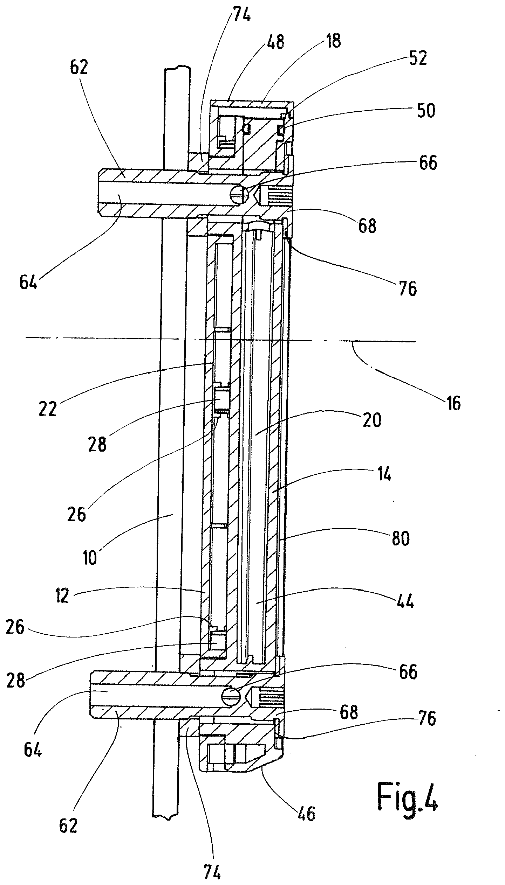

Die in der Fig. 1 in der Art einer Explosionszeichnung dargestellte Vorrichtung zum Anzeigen eines Fluidniveaus 16 in einem Vorratstank, von dem in der Fig. 4 ausschnittsweise nur eine Tankwand 10 eingezeichnet ist, weist als wesentliche Komponenten ein plattenförmiges Basisteil 12 zum Festlegen an dem Vorratstank auf sowie ein in der Art eines Steigrohrs ausgebildetes Gehäuseteil 14 zum Anzeigen eines dem Inhalt des Vorratstanks entsprechenden Fluidniveaus 16, das in der Fig. 4 in Form einer fiktiven Strichlinie wiedergegeben ist. Des Weiteren ist ein stopfenartiges Verschlussteil 18 vorhanden, das zum Abdichten des Inneren 20 des Gehäuseteiles 14 gegenüber der Umgebung dient.

Das Basisteil 12 weist rückwärtig eine eben verlaufende Rückwand 22 auf, die gemäß der Darstellung nach der Fig. 4 im montierten Zustand einen Abstand zu der zuordenbaren Tankwand 10 des Vorratstanks aufweist. Des Weiteren weist die Rückwand 22 randseitig einen in Richtung des Gehäuseteils 14 vorspringenden Festlegerand 24 auf, der U-förmig ausgebildet ist und in Blickrichtung auf die Fig. 1 gesehen, nach oben hin einen Einsatzraum für das Verschlussteil 18 frei lässt. An der Übergangsstelle zwischen diesem Festlegerand 24 und der bodenseitigen Rückwand 22 sind Rastmittel in Form von Rastausnehmungen 26 angeordnet, die paarweise einander gegenüberliegend eine Angriffsmöglichkeit für weitere Rastmittel in Form von Rasthaken 28 am Gehäuseteil 14 ausbilden. Auch die dahingehenden Rasthaken 28 am Gehäuseteil 14 liegen in Längsrichtung des Gehäuseteiles 14 gesehen paarweise in derselben Höhe einander gegenüber, so dass insgesamt sechs Rasthaken 28 am Gehäuseteil 14 in verclippender Weise in sechs Rastausnehmungen 26 im Gehäuseteil 14 für einen lösbaren Festlegevorgang eingreifen können. Dergestalt lässt sich das hohlkammerartige Gehäuseteil 14 mit dem im Wesentlichen plattenartigen Basisteil 12 verclippen, wobei der teilweise umlaufende Festlegerand 24 passgenau einen Wandstreifen 30 am Gehäuseteil 14 übergreift, so dass insoweit das Gehäuseteil 14 in diesem Bereich von dem Basisteil 12 randseitig umfasst ist.

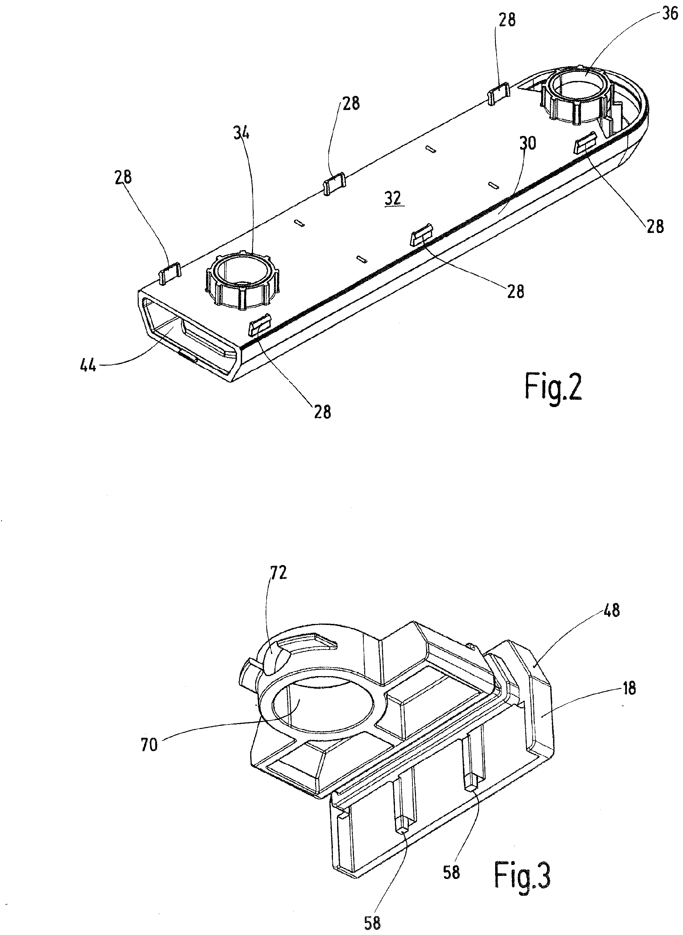

Wie insbesondere die Fig. 2 zeigt, sind die einzelnen Rasthaken 28 aus stegartigen Vorsprüngen gebildet, die mit ihrer Hakenform in Richtung des Wandstreifens 30 ausgerichtet sind und ansonsten von der ebenen Rückseite 32 des Gehäuseteils 14 nach oben hin vorstehen. Für einen verbesserten Eingriff mit dem Basisteil 12 sind auf der Rückseite 32 des Gehäuseteiles 14 zwei ringförmige Eingriffskörper 34 und 36 vorgesehen, die gemäß der Darstellung nach der Fig. 1 in zwei korrespondierend ausgebildete, ringförmige Ausnehmungen 38, 40 des Basisteils 12 im montierten Zustand eingreifen. Die ringförmigen Ausnehmungen 38, 40 weisen auf ihrer Innenseite an der Stelle des Überganges zur Rückwand 22 stegartig voneinander abgesetzte, einzelne Begrenzungen 42 auf, die innenumfangsseitig die jeweilige ringförmige Ausnehmung 38, 40 begrenzen und die eine axiale Anschlagmöglichkeit für die freie Stirnseite der beiden Eingriffskörper 34, 36 ausbilden.

Das Gehäuseteil 14 ist für die optische Beobachtung des Fluidniveaus 16 transparent ausgebildet und verfügt über eine Hohlkammer oder einen Hohlraum 44 für die Aufnahme eines das Fluidniveau 16 bestimmenden Fluids, das vom Vorratstank stammt.

Wie sich weiter, insbesondere aus den Fig. 1 und 3 ergibt, ist das Verschlussteil 18 aus einem Stopfen gebildet, der das Gehäuseteil 14 in Blickrichtung auf die Fig. 1 gesehen zu seiner Kopfseite nach oben hin abschließt, wohingegen das Gehäuseteil 14 auf seiner hierzu gegenüberliegenden Seite, also auf seiner Fußseite von Wandteilen 46 des Gehäuseteils 14 verschlossen ist. Das Verschlussteil 18 weist ein Kopfteil 48 auf, das auf seiner Unterseite in Anlage kommt mit einer ringförmigen Elastomerdichtung 50, die unter Auflage in eine ringnutartige Vertiefung 52 an der freien Stirnseite des Gehäuseteiles 14 bei aufgesetztem Verschlussteil 18, die Abdichtung des Hohlraumes 44 im Innern 20 des Gehäuseteiles 14 gegenüber der Umgebung vornimmt. Des Weiteren weist das Verschlussteil 18 auf der Unterseite seines Kopfteiles 48 eine Rastausnehmung in Form einer Eingriffsvertiefung 54 auf, in die als weiteres Rastmittel ein Rasthaken 56 an der freien Stirnseite des Gehäuseteiles 14 im verrasteten oder verclippten Zustand in Eingriff kommt. Ferner weist gemäß der Darstellung nach der Fig. 3 das Kopfteil 48 an seiner Unterseite zwei parallel zueinander verlaufende Raststege 58 auf, die in Eingriff kommen mit zuordenbaren Rastausnehmungen 60 mit quadratischem Querschnitt, die in Blickrichtung auf die Fig. 1 gesehen, im oberen Abschlusswandbereich der Rückwand 22 des Basisteils 12 durchgehend angeordnet sind. Mit den dahingehenden Rastmitteln 54, 56, 58 und 60 lässt sich in sicherer Weise das Verschlussteil 18 mit den bereits miteinander verbundenen Teilen in Form des Basisteils 12 und des Gehäuseteils 14 verrasten.

Wie sich weiter aus der Fig. 1 ergibt, ist die jeweilige Fluidverbindung aus einer Hohlschraube 62 gebildet, die sowohl das Gehäuseteil 14 als auch das Basisteil 12 und die Tankwand 10 des Vorratstanks durchgreift. Bei der in der Fig. 4 dargestellten Längsschnittdarstellung greifen die beiden Hohlschrauben 62 mit ihren freien Gewindeabschnitten nach Durchgreifen der Tankwand 10 in den Vorratstank ein und werden dort mittels sogenannter Kontermuttern, die der Einfachheit halber nicht dargestellt sind, an der Tankwand 10 festgelegt und mithin die Anzeigevorrichtung am Vorratstank.

Eine jede Hohlschraube 62 weist mittig einen Fluidkanal 64 auf, der mit seiner einen freien Seite in das Innere des Vorratstanks ausmündet und mit seiner anderen Seite in mindestens eine Querbohrung 66, die wiederum in den Hohlraum 44 des Gehäuseteiles 14 austritt und dergestalt eine fluidführende Verbindung zwischen dem Inneren des Vorratstanks und dem Inneren 20 des Gehäuseteiles 14 herstellt. Es versteht sich das in Blickrichtung auf die Fig. 1 und 4 gesehen, die obere Hohlschraube 62 die Tankluft als Fluid führt und die untere Hohlschraube 62 demgegenüber die Flüssigkeit des Vorratstanks in den Hohlraum 44 des Gehäuseteiles 14 einleitet, so dass das Fluidniveau 16 im Vorratstank auch als anzuzeigendes Fluidniveau 16 im Gehäuseteil 14 ankommt. Ferner ist eingängig, dass bei sich änderndem Fluidniveau 16 im Vorratstank sich auch das Fluidniveau 16 im Gehäuseteil 14 entsprechend ändert, so dass die Flüssigkeitsstandsanzeige insoweit funktionsmäßig im Gebrauch ist. Die jeweilige Hohlschraube 62 lässt sich über ihren Schraubenkopf 68 mittels eines geeigneten Eingriffswerkzeuges gegenüber den nicht näher dargestellten Kontermuttern im Vorratstank im Rahmen einer Einschraubbewegung festlegen.

Wie sich aus den Fig. 1 und 3 ergibt, weist das Verschlussteil 18 einstückig angeformt im unteren Bereich eine Ringausnehmung 70 auf, die bodenseitig mit einer Öffnung 72 versehen ist für eine fluidführende Verbindung des Fluidkanals 64 über die jeweilige Querbohrung 66 der oberen Hohlschraube 62 zu der Öffnung 72, so dass insoweit über die Öffnung 72 die luftführende Verbindung zum Innern des Vorratstanks hergestellt ist. Die Ringausnehmung 70 im Verschlussteil 18 dient als der Lagefixierung und als Verliersicherung für die obere Hohlschraube 62. Wie sich weiter aus der Fig. 1 ergibt, sind Paare von Ringdichtungen 74, 76 vorhanden, wobei die Ringdichtungen 74 einen gleichen Innen- und Außendurchmesser aufweisen und sich die Ringdichtungen 74 gegenüber der Ringdichtung 76 nur dadurch unterscheiden, dass diese breiter ausgebildet sind als die als Flachdichtung konzipierten Ringdichtungen 76. Über die Ringdichtungen 74 ist demgemäß eine Abdichtung der Anzeigevorrichtung gegenüber der Tankwand 10 mit dem Durchgriff der Hohlschrauben 62 erreicht, wohingegen die Flach-Ringdichtungen 76 im Bereich des Schraubenkopfes 68 einer jeden Hohlschraube 62 die Abdichtung der Anzeigevorrichtung gegenüber der Umgebung vornehmen.

Für eine sichere Festlegung der Hohlschrauben 62 ist darüber hinaus vorgesehen, dass das Gehäuseteil 14 an seiner freien, der Rückwand 22 des Basisteils 12 gegenüberliegenden Stirnseite 78 eine Vertiefung 80 aufweist, an der sich die jeweilige Hohlschraube 62 mit ihrem Schraubenkopf 68 über die Ringdichtung 76 abstützen kann. Dergestalt ist gemäß der Darstellung nach der Fig. 4 der Schraubenkopf 68 mit der zugehörigen Ringdichtung 76 im Wesentlichen bündig in der Vertiefung 80 des Gehäuseteiles 14 aufgenommen. Für einen Toleranzausgleich zum Festlegen der Anzeigevorrichtung an der Tankwand 10 ist in Blickrichtung auf die Fig. 1 gesehen die obere Ausnehmung 82, die in den ringförmigen Eingriffskörper 34 übergeht, als Langloch konzipiert, so dass die obere Hohlschraube 62 mit Spiel in der dahingehenden oberen Ausnehmung 82 in Längsrichtung geführt ist, was auch den Ausgleich eines Bohrungsversatzes ermöglicht. Die demgegenüber untere Ausnehmung 84 in der Vertiefung 80, die in den weiteren ringförmigen Eingriffskörper 36 fluchtend übergeht, kann ebenso als Langloch konzipiert sein; zwingend ist dies aber nicht.

Mit der erfindungsgemäßen Anzeigevorrichtung ist ein Baukastensystem mit den Einzelmodulen Basisteil 12, Gehäuseteil 14, Verschlussteil 18, Hohlschrauben 62 und Ringdichtungen 74, 76 verwirklicht, das unter Einsatz der beschriebenen Clipverbindungen sich einfach und verwechslungssicher an Fluid-Vorratstanks nahezu jeder Bauart festlegen lässt.

## Patentansprüche

1. Vorrichtung zum Anzeigen eines Fluidniveaus in einem Vorratstank, die mittels zweier, vertikal voneinander beabstandeter Fluidverbindungen an dem Vorratstank anschließbar ist, bestehend aus drei miteinander verclipbaren Komponenten in Form
- eines Basisteils (12) zum Festlegen an den Vorratstank,
- eines in der Art eines Steigrohrs ausgebildeten Gehäuseteils (14) zum Anzeigen eines dem Inhalt des Vorratstanks entsprechenden Fluidniveaus (16), und
- eines Verschlussteils (18) zum Abdichten des Innern (20) des Gehäuseteils (14) gegenüber der Umgebung,
wobei die jeweilige Clipverbindung aus einem Rasthaken (28, 56) als dem Rastmittel der einen Komponente gebildet ist, die in eine zugehörige Rastausnehmung (26, 54) als dem Rastmittel der anderen zu verclippenden Komponente, vorzugsweise in wieder lösbarer Weise, eingreift.

2. Vorrichtung nach Anspruch 1, **dadurch gekennzeichnet, dass** das Basisteil (12) rückwärtig eine eben verlaufende Rückwand (22) aufweist, die im montierten Zustand einen Abstand zu einer zuordenbaren Tankwand (10) des Vorratstanks aufweist und die in Richtung des Gehäuseteils (14) vorspringend einen Festlegerand (24) aufweist mit Rastmitteln (26) zum Verclippen mit weiteren Rastmitteln (28) des Gehäuseteils (14).

3. Vorrichtung nach Anspruch 1 oder 2, **dadurch gekennzeichnet, dass** das Gehäuseteil (14) für die optische Beobachtung des Fluidniveaus (16) transparent ausgebildet ist und einen Hohlraum (44) für die Aufnahme eines das Fluidniveau (16) bestimmenden Fluids aufweist.

4. Vorrichtung nach einem der vorstehenden Ansprüche, **dadurch gekennzeichnet, dass** das Verschlussteil (18) aus einem Stopfen gebildet ist, der das Gehäuseteil (14) nach einer Seite hin, insbesondere kopfseitig, abschließt, wohingegen das Gehäuseteil (14) auf seiner hierzu gegenüberliegenden Seite, insbesondere fußseitig, von Wandteilen (46) des Gehäuseteils (14) verschlossen ist.

5. Vorrichtung nach einem der vorstehenden Ansprüche, **dadurch gekennzeichnet, dass** die jeweilige Fluidverbindung aus einer Hohlschraube (62) gebildet ist, die sowohl das Gehäuseteil (14) als auch das Basisteil (12) und die Tankwand (10) des Vorratstanks durchgreift und mittels Ringdichtungen (74) zumindest gegenüber der Tankwand (10) und dem Gehäuseteil (14) abgedichtet ist.

6. Vorrichtung nach einem der vorstehenden Ansprüche, **dadurch gekennzeichnet, dass** das Verschlussteil (18) eine Ringausnehmung (70) aufweist, die von derjenigen Hohlschraube (62) durchgriffen ist, die oberhalb des Fluidniveaus (16) im Vorratstank in diesen eingreift.

7. Vorrichtung nach einem der vorstehenden Ansprüche, **dadurch gekennzeichnet, dass** die Rückwand (22) des Basisteils (10) von Ausnehmungen für die jeweilige Hohlschraube (62) durchgriffen ist, die als ringförmige Aufnahmen (38, 40) in Richtung des Gehäuseteils (14) vorstehen.

8. Vorrichtung nach einem der vorstehenden Ansprüche, **dadurch gekennzeichnet, dass** das Gehäuseteil (14) an seiner freien, der Rückwand (22) des Basisteils (12) gegenüberliegenden Stirnseite (78) eine Vertiefung (80) aufweist, an der sich die Hohlschraube (62) mit ihrem Schraubenkopf (68) über eine Ringdichtung (76) abstützt, und dass die jeweilige Hohlschraube (62) im Bereich der Vertiefung (80) eine weitere Ausnehmung (82, 84) durchgreift, die mit der zuordenbaren Ausnehmung (38, 40) im Basisteil (12) fluchtet.

9. Vorrichtung nach Anspruch 8, **dadurch gekennzeichnet, dass** eine der weiteren Ausnehmungen (82) im Gehäuseteil (14) in der Art eines Langloches ausgebildet ist.

## Claims

1. Device for indicating a fluid level in a storage tank, which device can be connected to the storage tank by means of two fluid connections vertically spaced apart from each other, the device consisting of three components which can be clipped to one another, in the form of
- a base part (12) for fastening to the storage tank,
- a housing part (14) configured in the manner of a riser pipe for indicating a fluid level (16) corresponding to the contents of the storage tank, and
- a closure part (18) for sealing off the interior (20) of the housing part (14) from the environment,
wherein the respective clip connection is formed of a locking hook (28, 56), as the locking means of one component, which engages, preferably in a releasable manner, in an associated locking recess (26, 54) as the locking means of the other component to be clipped.

2. Device according to claim 1, **characterised in that** the base part (12) has a rear wall (22) extending flush at the rear which is at a distance from an assignable tank wall (10) of the storage tank in the mounted state and which, protruding towards the housing part (14), has a retaining edge (24) with locking means (26) for clipping to further locking means (28) of the housing part (14).

3. Device according to either claim 1 or claim 2, **characterised in that** the housing part (14) is configured to be transparent for visual observation of the fluid level (16) and a cavity (44) for receiving a fluid which determines the fluid level (16).

4. Device according to one of the preceding claims, **characterised in that** the closure part (18) is formed of a plug which closes off the housing part (14) towards one side, in particular the head end, whereas the housing part (14) is closed on its side opposite thereto, in particular at the foot end, by wall parts (46) of the housing part (14).

5. Device according to one of the preceding claims, **characterised in that** the respective fluid connection is formed of a hollow screw (62) which passes through both the housing part (14) as well as the base part (12) and the tank wall (10) of the storage tank and is sealed by means of ring seals (74) at least with respect to the tank wall (10) and the housing part (14).

6. Device according to one of the preceding claims, **characterised in that** the closure part (18) has an annular recess (70) through which the hollow screw (62) that engages in the storage tank above the fluid level (16) therein passes.

7. Device according to one of the preceding claims, **characterised in that** the rear wall (22) of the base part (10) is penetrated by recesses for the respective hollow screw (62) which recesses, as annular receptacles (38, 40), protrude towards the housing part (14).

8. Device according to one of the preceding claims, **characterised in that** the housing part (14) has, on its free end face (78) opposite the rear wall (22) of the base part (12), an indentation (80) on which the hollow screw (62) rests with its screw head (68) via a ring seal (76), and **in that** the respective hollow screw (62) penetrates a further recess (82, 84) in the region of the indentation (80), which recess is aligned with the assignable recess (38, 40) in the base part (12).

9. Device according to claim 8, **characterised in that** one of the further recesses (82) in the housing part (14) is configured in the manner of an elongated hole.

## Revendications

1. Dispositif d'indication d'un niveau de fluide dans un réservoir, qui peut être raccordé au réservoir au moyen de deux liaisons fluidiques à distance verticalement l'une de l'autre, constitué de trois composants pouvant être clipsés entre eux sous la forme
- d'une partie (12) de base à fixer au réservoir,
- d'une partie (14) de boîtier constituée à la manière d'un tuyau ascendant pour l'indication d'un niveau (16) du fluide correspondant au contenu du réservoir, et
- d'une partie (18) de fermeture pour rendre l'intérieur (20) de la partie (14) du boîtier étanche par rapport à l'environnement,
dans lequel le clipsage respectif est formé d'un crochet (28, 56) d'encliquetage en tant que moyen d'encliquetage du un composant, qui pénètre dans un évidement (26, 54) d'encliquetage lui appartenant comme moyen d'encliquetage de l'autre composant à clipser, de préférence d'une manière redétachable.

2. Dispositif suivant la revendication 1, **caractérisé en ce que** la partie (12) de base a, vers l'arrière, une paroi (22) arrière s'étendant de manière plane, qui, à l'état monté, est à distance d'une paroi (10) de réservoir pouvant être associée et qui a, faisant saillie dans la direction de la partie (14) du boîtier, un bord (24) de fixation ayant des moyens (26) d'encliquetage pour le clipsage avec d'autres moyens (28) d'encliquetage de la partie (14) de boîtier.

3. Procédé suivant la revendication 1 ou 2, **caractérisé en ce que** la partie (14) du boîtier est de constitution transparente pour l'observation visuelle du niveau (16) de fluide et a une cavité (44) pour la réception d'un fluide déterminant le niveau (16) de fluide.

4. Procédé suivant l'une des revendications précédentes, **caractérisé en ce que** la partie (18) de fermeture est formée d'un bouchon, qui ferme la partie (14) de boîtier d'un côté, en particulier du côté de la tête, tandis que la partie (14) de boîtier est, du côté opposé, en particulier du côté du pied, fermée par des parties (46) de paroi de la partie (14) de boîtier.

5. Procédé suivant l'une des revendications précédentes, **caractérisé en ce que** la liaison fluidique respective est formée d'une vis (62) creuse, qui traverse tant la partie (14) de boîtier qu'également la partie (12) de base et la paroi (10) du réservoir et est, au moyen de garnitures (74) d'étanchéité annulaires, rendue étanche au moins par rapport à la paroi (10) du réservoir et la partie (14) de boîtier.

6. Procédé suivant l'une des revendications précédentes, **caractérisé en ce que** la partie (18) de fermeture a un évidement (70) annulaire, dans lequel passe la vis (62) creuse, qui, au-dessus du niveau (16) du fluide dans le réservoir, y pénètre.

7. Procédé suivant l'une des revendications précédentes, **caractérisé en ce que** la paroi (22) arrière de la partie (10) de base est traversée par des évidements pour la vis (62) creuse respective, qui font saillie en tant que logements (38, 40) annulaires en direction de la partie (14) de boîtier.

8. Procédé suivant l'une des revendications précédentes, **caractérisé en ce que** la partie (14) de boîtier a, sa face (78) frontale libre opposée à la paroi (22) arrière de la partie (12) de base, un creux (80), où la vis (62) creuse s'appuie par sa tête (68) de vis par l'intermédiaire d'une garniture (76) d'étanchéité annulaire, et **en ce que** la vis (62) creuse respective pénètre dans la partie du creux (80) dans un autre évidement (82, 84), qui est aligné avec l'évidement (38, 40) pouvant être associé dans la partie (12) de base.

9. Procédé suivant la revendication 8, **caractérisé en ce que** l'un des autres évidements (82) dans la partie (14) du boîtier est constitué à la manière d'une boutonnière.
